# EUROPÄISCHE PATENTSCHRIFT

(11) **EP 3 551 973 B1**
(45) Veröffentlichungstag und Bekanntmachung des Hinweises auf die Patenterteilung: **04.01.2023**
(21) Anmeldenummer: 17811508.5
(22) Anmeldetag: 27.11.2017
(51) Int. Cl.: G01J 1/42, G01J 5/00, G01J 5/08, H05B 47/115

(54) **SENSOR-ANORDNUNG ZUM ERKENNEN EINER BEWEGUNG UND/ODER EINER ANWESENHEIT EINER PERSON**
SENSOR ASSEMBLY FOR DETECTING THE MOVEMENT AND/OR THE PRESENCE OF A PERSON
ENSEMBLE DE DÉTECTION POUR DÉTECTER LE MOUVEMENT ET/OU LA PRÉSENCE D'UNE PERSONNE

(30) Priorität: 09.12.2016 DE 202016106865 U
(43) Veröffentlichungstag der Anmeldung: 16.10.2019
(73) Patentinhaber: Tridonic GmbH & Co KG, 6851 Dornbirn (AT)
(72) Erfinder: KÜNZLI, Markus, 8750 Glarus (CH); KISTLER, Roger, 8755 Ennenda (CH); BARTH, Volker, 73550 Waldstetten (DE); FÖRSTLER, Harry, 8754 Netstal (CH)
(74) Vertreter: Thun, Clemens
(86) Internationale Anmeldenummer: PCT/EP2017/080453
(87) Internationale Veröffentlichungsnummer: WO 2018/104088

(56) Entgegenhaltungen:
- EP-A2- 0 838 793
- WO-A2-2012/068507
- US-A1- 2014 084 165

## Beschreibung

Die Erfindung betrifft eine Sensor-Anordnung zum Erkennen einer Bewegung und/oder einer Anwesenheit einer Person.

Aus dem Stand der Technik ist ein derartiger Sensor in Form eines Passiv-Infrarot-Bewegungsmelders, auch als PIR-Sensors (PIR: passive infrared) bezeichnet, bekannt. Der PIR-Sensor reagiert unter Ausnutzung der Pyroelektrizität; er weist zwei oder vier dicht nebeneinander angeordnete Pyroelemente auf, über die sich eine "Optik" in Form eines kuppelartigen Elements erstreckt. Die Optik umfasst kleine Sammellinsen, die sich jeweils im Brennweitenabstand zu den Pyroelementen befinden. Die Optik besteht dabei aus Polyethylen und ist dementsprechend für Infrarotstrahlung geeignet durchlässig. Der PIR-Sensor reagiert auf eine Änderung der einfallenden Infrarotstrahlung-Wärmestrahlung, wie sie beispielsweise durch einen, sich vor dem PIR-Sensor bewegenden Menschen hervorgerufen werden kann.

Aus der WO 2012/068507 A2 ist ein Thermostat mit integrierten Sensoren - insbesondere zumindest ein PIR-Sensor und ein Umgebungslichtsensor - bekannt, wobei die Sensoren innerhalb eines Gehäuses angeordnet sind. Das Gehäuse weist eine Öffnung auf, wobei eine lichtdurchlässige Abdeckung diese Öffnung zumindest teilweise überdeckt, und wobei diese Abdeckung unterschiedliche Transmissionsgrade für unterschiedliche elektromagnetische Strahlungen aufweist, wobei langwellige Infrarotstrahlung überwiegend abgeschirmt wird. Die Abdeckung ist den Umgebungslichtsensor abschattend angeordnet, wobei der PIR-Sensor von der Abdeckung nicht abgedeckt wird. Die Abdeckung ist zudem starr montiert, wobei die Abdeckung nur in einer bestimmten Position montiert werden kann, bedingt durch ein Gitterelement mit Schlitzen, welches über dem PIR-Sensor montiert ist, sodass durch die Schlitze Infrarotstrahlen auf den PIR-Sensor treffen. Das Gitterelement ist austauschbar, wobei sich die Anordnung der Schlitze auf den unterschiedlichen Gitterelementen unterscheidet, sodass Infrarotstrahlung unterschiedlich vom PIR-Sensor erfasst wird. Das Gitterelement ist hierbei nur in einer Position montierbar, wobei die Position des Gitterelements auch im montierten Zustand nicht veränderbar ist.

Es ist bei derartigen PIR-Sensoren bekannt, mit Hilfe eines Abschattungs-Elements, eines so genannten "Shutters" den Erfassungsbereich der Optik des PIR-Sensors auf einen bestimmten Bereich zu beschränken. Diese Shutter können unterschiedliche Formen aufweisen und sind im Weg der Infrarotstrahlung der Optik vorgeordnet. Sie schatten hierbei einen entsprechenden gewünschten Bereich von Sammellinsen der Optik des PIR-Sensors ab, sodass nur noch bestimmte Bereiche eines Raums, in dem der PIR-Sensor angeordnet ist, durch den PIR-Sensor erfasst werden.

Der PIR-Sensor kann beispielsweise als Schalter zum Einschalten einer Leuchte ausgestaltet sein.

Der Erfindung liegt die Aufgabe zugrunde, eine entsprechende Sensor-Anordnung mit Bezug auf ihre Funktionalität zu verbessern. Insbesondere soll sich die Sensor-Anordnung für eine lichttechnische Messung und/oder eine drahtlose Infrarot-Kommunikation eignen.

Diese Aufgabe wird gemäß der Erfindung mit dem in dem unabhängigen Anspruch 1 genannten Gegenstand gelöst. Besondere Ausführungsarten der Erfindung sind in den abhängigen Ansprüchen angegeben.

Gemäß der Erfindung ist eine Sensor-Anordnung zum Erkennen einer Bewegung und/oder einer Anwesenheit einer Person vorgesehen, die ein Gehäuse mit einer Öffnung für eine elektromagnetische Strahlung erster Art und eine elektromagnetische Strahlung zweiter Art aufweist. Weiter weist die Sensor-Anordnung einen, in dem Gehäuse angeordneten Sensor zum Erfassen der elektromagnetischen Strahlung erster Art auf und ein Abschattungs-Element, das die Öffnung teilweise abschattend an dem Gehäuse angeordnet ist. Dabei weist das Abschattungs-Element für die elektromagnetische Strahlung erster Art einen Transmissionsgrad auf, der kleiner als 30% ist. Weiter weist die Sensor-Anordnung ein, in dem Gehäuse angeordnetes Sende- und/oder Empfangselement zum Senden und/oder Empfangen von der elektromagnetischen Strahlung zweiter Art auf. Dabei weist das Abschattungs-Element für die elektromagnetische Strahlung zweiter Art einen Transmissionsgrad auf, der größer als 60% ist.

Das Abschattungs-Element ist also für die elektromagnetische Strahlung zweiter Art sehr durchlässig, so dass sich erzielen lässt, dass die Wirkungsweise des Sende- und/oder Empfangselement durch das Abschattungselement praktisch nicht negativ beeinflusst ist. Daher ist die Gestaltung insbesondere vorteilhaft mit Bezug auf die Funktionalität des Sende- und/oder Empfangselement.

Erfindungsgemäß ist das Abschattungs-Element derart ausgebildet, dass es sich in unterschiedlichen Positionen an dem Gehäuse anbringen lässt, so dass es in jeder der Positionen jeweils einen anderen Teilbereich des Sensors, respektive des Erfassungsbereichs des Sensors, abschattet.

Vorzugsweise weist das Abschattungs-Element für die elektromagnetische Strahlung erster Art einen Transmissionsgrad auf, der kleiner als 20% ist und/oder für die elektromagnetische Strahlung zweiter Art einen Transmissionsgrad, der größer als 70% ist.

Vorzugsweise ist die elektromagnetische Strahlung erster Art eine elektromagnetische Strahlung in einem ersten Wellenlängenbereich und die elektromagnetische Strahlung zweiter Art eine elektromagnetische Strahlung in einem zweiten Wellenlängenbereich, wobei sich der erste Wellenlängenbereich und der zweite Wellenlängenbereich nicht überlappen. Beispielsweise kann die elektromagnetische Strahlung in dem ersten Wellenlängenbereich eine Infrarotstrahlung sein und die elektromagnetische Strahlung in dem zweiten Wellenlängenbereich Licht und/oder eine weitere Infrarotstrahlung, wobei die weitere Infrarotstrahlung insbesondere kürzere Wellenlängen umfasst als die zuerst genannte Infrarotstrahlung.

Wenn das Sende- und/oder Empfangselement sensibel auf Licht reagiert, lässt sich beispielsweise erzielen, dass es sich besonders zur Erfassung einer Lichtintensität eignet. Wenn das Sende- und/oder Empfangselement sensibel auf die weitere Infrarotstrahlung reagiert, lässt sich beispielsweise erzielen, dass es sich besonders für eine Infrarot-Kommunikation eignet.

Vorzugsweise besteht das Abschattungs-Element zumindest überwiegend aus einem lichtdurchlässigen Kunststoff, insbesondere aus Polycarbonat. Ein derartiges Material eignet sich bei vorteilhaften Gestaltungsmöglichkeiten besonders aufgrund seiner entsprechenden Transmissionseigenschaften.

Vorzugsweise ist das Abschattungs-Element reversibel von dem Gehäuse abnehmbar gestaltet, insbesondere über eine Rastverbindung an dem Gehäuse gehalten angeordnet. So lässt sich die Sensor-Anordnung wahlweise mit oder ohne das Abschattungs-Element verwenden; dies ist vorteilhaft mit Bezug auf die Einsatzmöglichkeiten der Sensor-Anordnung.

Vorzugsweise ist das Abschattungs-Element relativ zu dem Gehäuse um eine Drehachse drehbar gelagert. Auch hierdurch lassen sich die Anwendungsmöglichkeiten der Sensor-Anordnung verbessern. Vorzugsweise verläuft dabei die Drehachse durch den Sensor.

Vorzugsweise ist das Sende und/oder Empfangselement in einem, sich ringförmig um den Sensor erstreckenden Bereich angeordnet, insbesondere sich ringförmig um den Sensor erstreckend angeordnet. Auf diese Weise ist insbesondere eine besonders kleinräumige Gestaltung der Sensor-Anordnung ermöglicht.

Vorzugsweise ist das Sende und/oder Empfangselement zum Messen einer Helligkeit eines durch die Öffnung einfallenden Lichts ausgestaltet und/oder für eine drahtlose Kommunikation mittels Infrarotstrahlung. Dies ist besonders vorteilhaft mit Bezug auf die Funktionalität der Sensor-Anordnung.

Vorzugsweise weist die Sensor-Anordnung weiterhin ein ringartiges Rahmenelement zur Halterung des Abschattungs-Elements auf, wobei vorzugsweise das Abschattungs-Element relativ zu dem Rahmenelement drehbar gelagert ist. So lässt sich eine besonders bedienungsfreundliche Handhabung bei einem Verstellen des Abschattungs-Elements erzielen.

Vorzugsweise weist die Sensor-Anordnung ein kuppelartiges Element zur Beeinflussung der elektromagnetischen Strahlung erster Art auf, wobei das kuppelartige Element vorzugsweise zumindest überwiegend aus Polyethylen besteht.

Vorzugsweise ist dabei das Abschattungs-Element das kuppelartige Element teilweise abdeckend angeordnet. Dies ist insbesondere vorteilhaft mit Bezug auf die Handhabungsmöglichkeit der Sensor-Anordnung.

Die Erfindung wird im Folgenden anhand eines Ausführungsbeispiels und mit Bezug auf die Zeichnungen näher erläutert. Es zeigen:
- Fig. 1: eine Querschnitt-Skizze eines Ausführungsbeispiels einer anmeldungsgemäßen Sensor-Anordnung und

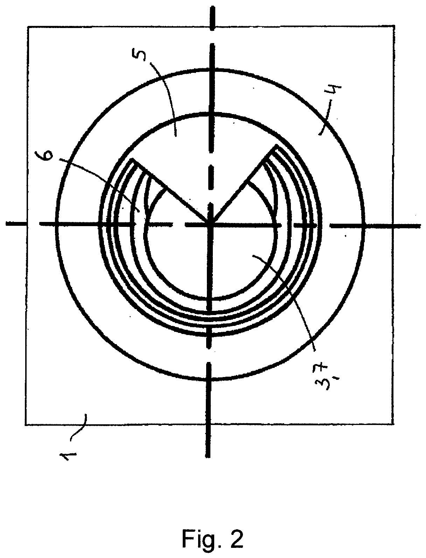

- Fig. 2: eine entsprechende Aufsicht.

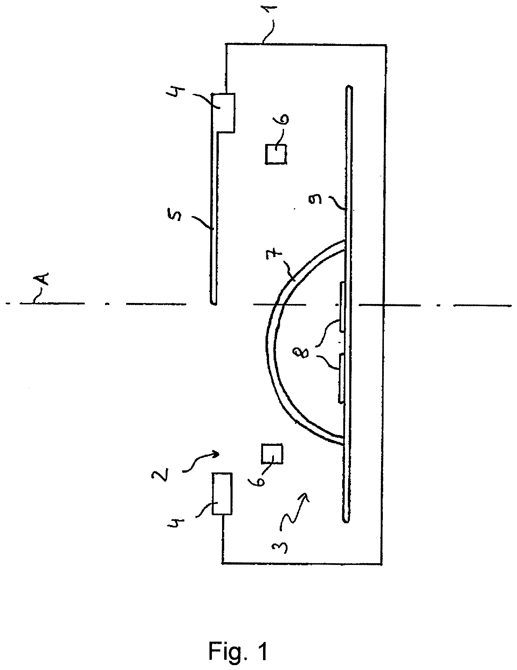

Fig. 1 zeigt eine Querschnitt-Skizze eines Ausführungsbeispiels einer anmeldungsgemäßen Sensor-Anordnung, hier auch kurz als Anordnung bezeichnet. Die Anordnung umfasst ein Gehäuse 1 mit einer Öffnung 2 für eine elektromagnetische Strahlung. Bei der elektromagnetischen Strahlung handelt es sich insbesondere um eine elektromagnetische Strahlung erster Art und eine elektromagnetische Strahlung zweiter Art. Vorzugsweise ist dabei die elektromagnetische Strahlung erster Art eine elektromagnetische Strahlung in einem ersten Wellenlängenbereich und die elektromagnetische Strahlung zweiter Art eine elektromagnetische Strahlung in einem zweiten Wellenlängenbereich, wobei sich der erste Wellenlängenbereich und der zweite Wellenlängenbereich nicht überlappen.

Insbesondere kann die elektromagnetische Strahlung in dem ersten Wellenlängenbereich eine Infrarotstrahlung IR1 sein und die elektromagnetische Strahlung in dem zweiten Wellenlängenbereich Licht VIS und/oder eine weitere Infrarotstrahlung IR2, wobei die weitere Infrarotstrahlung IR2 insbesondere kürzere Wellenlängen umfasst als die zuerst genannte Infrarotstrahlung IR1.

Beispielsweise kann die zuerst genannte Infrarotstrahlung IR1 eine untere Wellenlängen-Grenze von 1 µm oder 4 µm oder 5 µm oder 7 µm aufweisen und eine obere Wellenlängen-Grenze von 10 µm oder 15 µm oder 20 µm oder 50 µm oder 100 µm oder 200 µm. Besonders geeignet erstreckt sich der erste Wellenlängenbereich von 4 µm bis 15 µm.

Beispielsweise kann die weitere Infrarotstrahlung IR2 eine untere Wellenlängen-Grenze von 0,78 µm oder 0,80 µm oder 0,85 µm aufweisen und eine obere Wellenlängen-Grenze von 0,95 µm oder 1,00 µm oder 2,00 µm. Besonders geeignet erstreckt sich die weitere Infrarotstrahlung IR2 von 0,78 µm bis 1,00 µm.

Die folgende Tabelle gibt drei besonders bevorzugte Möglichkeiten für den zweiten Wellenlängenbereich an:

| | |
|---|---|
| Erste Möglichkeit: | 0,38 µm bis 0,78 µm |
| Licht VIS | |
| Zweite Möglichkeit: | 0,38 µm bis 0,78 µm und 0,78 µm bis 1,00 µm |
| Licht VIS + weitere Infrarotstrahlung IR2 | |
| Dritte Möglichkeit: | 0,78 µm bis 1,00 µm |
| weitere Infrarotstrahlung IR2 | |

Weiterhin weist die Anordnung einen, in dem Gehäuse 1 angeordneten Sensor 3 zum Erfassen der elektromagnetischen Strahlung erster Art auf. Bei dem Sensor 3 als solchem kann es sich insbesondere um einen Passiv-Infrarot-Bewegungsmelder handeln, wie er eingangs erwähnt ist und an sich aus dem Stand der Technik bekannt ist.

Insbesondere kann der Sensor 3 also so gestaltet sein, dass er durch Erfassen der elektromagnetischen Strahlung erster Art bzw. einer zeitlichen Änderung hiervon eine Bewegung und/oder eine Anwesenheit einer Person detektieren kann.

Insbesondere kann der Sensor 3 zwei oder mehr nebeneinander angeordnete Pyroelemente 8 aufweisen. Vorzugsweise weist der Sensor 3 ein kuppelartiges Element 7 - hier auch als Optik 7 bezeichnet - zur Beeinflussung, insbesondere zur Richtungslenkung der elektromagnetischen Strahlung erster Art auf, das insbesondere die zwei Pyroelemente 8 überdeckend angeordnet ist. Beispielsweise kann der Sensor 3 weiterhin eine Tragplatte 9 aufweisen, auf der die Pyroelemente 8 und die Optik 7 angeordnet sind. Die Optik 7 kann mehrere kleine Sammellinsen, sozusagen Linsensegmente aufweisen, die sich jeweils im Brennweitenabstand zu den Pyroelementen 8 befinden.

Die Optik 7 kann im Allgemeinen derart gestaltet sein, dass sie sich teilweise über eine Ebene, die durch den Rand der Öffnung 2 gegeben ist, hinaus erhebt.

Vorzugsweise besteht die Optik 7 zumindest überwiegend aus Polyethylen. Dieses Material ist geeignet durchlässig für die zuerst genannte Infrarotstrahlung IR1, also für diejenige Infrarotstrahlung, auf der die Wirkungsweise des Sensors 3 beruht.

Weiterhin umfasst die Anordnung einen "Shutter" bzw. ein Abschattungs-Element 5, das die Öffnung 2 teilweise abschattend an dem Gehäuse 1 angeordnet ist. Das Abschattungs-Element 5 weist für die elektromagnetische Strahlung erster Art einen Transmissionsgrad auf, der kleiner als 30% ist, vorzugsweise kleiner als 20%, besonders bevorzugt kleiner als 15%.

Das Abschattungs-Element 5 ist insbesondere derart gestaltet, dass mit ihm ein Erfassungsbereich des Sensors 3 auf einen bestimmten Bereich eingegrenzt wird. Insbesondere kann es das kuppelartige Element 7 teilweise abdeckend angeordnet sein, beispielsweise derart, dass es mindestens eines der Linsensegmente des kuppelartigen Elements 7 abdeckt, vorzugsweise mindestens zwei der Linsensegmente.

Weiterhin umfasst die Anordnung ein in dem Gehäuse 1 angeordnetes Sende- und/oder Empfangselement 6 zum Senden und/oder Empfangen von der elektromagnetischen Strahlung zweiter Art auf.

Das Abschattungs-Element 5 weist dabei für die elektromagnetische Strahlung zweiter Art einen Transmissionsgrad auf, der größer als 60% ist, vorzugsweise größer als 70%, besonders bevorzugt größer als 75%. Hierdurch lässt sich erzielen, dass die elektromagnetische Strahlung zweiter Art von außen kommend quasi ungehindert das Abschattungs-Element 5 durchsetzt und auf das Sende- und/oder Empfangselement 6 auftrifft beziehungsweise gegebenenfalls in der entgegengesetzten Richtung von dem Sende- und/oder Empfangselement 6 abgestrahlt wird und das Abschattungs-Element 5 praktisch ohne merkliche Abschwächung durchsetzt. Dies ist vorteilhaft mit Bezug auf die Funktion des Sende- und/oder Empfangselements 6.

Vorzugsweise besteht das Abschattungs-Element 5 zumindest überwiegend aus einem lichtdurchlässigen Kunststoff, insbesondere aus Polycarbonat. Auf diese Weise lässt sich besonders geeignet erzielen, dass das Abschattungs-Element 5 einerseits die elektromagnetische Strahlung in dem zweiten Wellenlängenbereich in geeignetem Ausmaß für eine geeignete Wirkungsweise des Sende- und/oder Empfangselements 6 durchlässt, andererseits aber die elektromagnetische Strahlung in dem ersten Wellenlängenbereich wie erwünscht abblockt.

Beispielsweise kann das Sende- und/oder Empfangselement 6 zum Erfassen von Licht gestaltet sein, insbesondere als Helligkeitssensor zum Messen einer Helligkeit eines durch die Öffnung 2 einfallenden Lichts. Hierzu kann das Sende- und/oder Empfangselement 6 beispielsweise eine Fotodiode umfassen oder aus einer solchen gebildet sein. Dabei kann die Anordnung besonders vorteilhaft außerdem dafür ausgestaltet sein, in Abhängigkeit von der so erfassten Helligkeit eine Leuchte zur Beleuchtung einer Umgebung der Anordnung bzw. eines die Anordnung umgebenden Raums anzusteuern.

Alternativ oder ergänzend kann das Sende- und/oder Empfangselement 6 beispielsweise für eine drahtlose Kommunikation mittels Infrarot ausgestaltet sein, insbesondere für eine drahtlose Kommunikation unter Nutzung der weiteren Infrarotstrahlung IR2.

Hier ergibt sich als entsprechender Vorteil, dass durch das Abschattungs-Element 5 die weitere Infrarotstrahlung IR2 für die Kommunikation praktisch nicht beeinträchtigt wird, allerdings die für den Sensor 3 relevante zuerst genannte Infrarotstrahlung IR1 geblockt wird. Diesbezüglich ist anzumerken, dass für Infrarot-Kommunikation üblicherweise Strahlung in einem Wellenlängenbereich von etwa 850 nm bis 900 nm zum Einsatz kommt, die von dem Sensor 3 erfasste Strahlung allerdings üblicherweise im Bereich von 4 µm bis 15 µm liegt. Hier besteht also ein deutlicher Unterschied in den Wellenlängenbereichen, sodass beispielsweise bei der Wahl von Polycarbonat als Material für das Abschattungs-Element 5 eine entsprechende Trennung zwischen den beiden genannten Wellenlängenbereichen erzielt werden kann.

Weiterhin alternativ oder ergänzend kann das Sende- und/oder Empfangselement 6 beispielsweise eine am Umfang der Optik 7 des Sensors 3 angeordnete Status-LED umfassen oder durch eine solche gebildet sein, die einen Zustand des Sensors 3 signalisiert. So ist erzielbar, dass auch das von einer solchen Status-LED abgegebene Licht unabhängig von der aktuellen Stellung des Abschattungs-Elements 5 aufgrund der Transmissionseigenschaften des Abschattungs-Elements 5 von außen sichtbar ist.

Das Sende- und/oder Empfangselement 6 kann einen Wellenleiter umfassen.

Das Sende- und/oder Empfangselement 6 ist vorzugsweise in einem, sich ringförmig um den Sensor 3 erstreckenden Bereich angeordnet. Insbesondere kann es sich ringförmig um den Sensor 3 erstreckend angeordnet sein. So lässt sich die Anordnung insgesamt besonders kleinräumig gestalten. Das Sende- und/oder Empfangselement 6 kann also insbesondere ringförmig sein und insbesondere am Umfang des kuppelartigen Elements 7 des Sensors 3 angeordnet sein.

Vorzugsweise ist das Abschattungs-Element 5 reversibel von dem Gehäuse 1 abnehmbar gestaltet, insbesondere über eine Rastverbindung an dem Gehäuse 1 gehalten angeordnet. Erfindungsgemäß ist dabei die Gestaltung derart, dass sich das Abschattungs-Element 5 in unterschiedlichen Positionen an dem Gehäuse 1 anbringen, also beispielsweise anclipsen lässt, so dass es in jeder der Positionen jeweils einen anderen Teilbereich des Erfassungsbereichs des Sensors 3 abschattet.

Eine besonders geeignete Möglichkeit zur Erzielung vieler unterschiedlicher Abschattungsmöglichkeiten ist gegeben, wenn das Abschattungs-Element 5 relativ zu dem Gehäuse 1 um eine Drehachse A drehbar gelagert ist. Beispielsweise kann die Anordnung hierzu weiterhin ein ringartiges Rahmenelement 4 zur Halterung des Abschattungs-Elements 5 aufweisen, wobei vorzugsweise das Abschattungs-Element 5 relativ zu dem Rahmenelement 4 drehbar gelagert ist. Dabei kann - wie im gezeigten Beispiel der Fall - die Drehachse A durch den Sensor 3 verlaufen. Bei der Drehachse A kann es sich um eine Zentralachse des Sensors 3 handeln. Allerdings kann die Drehachse A auch außermittig mit Bezug auf den Sensor 3 verlaufen, wie in dem in den Figuren skizzierten Beispiel der Fall.

Das Rahmenelement 4 kann weiterhin zur Halterung der Tragplatte 9 dienen.

Wie aus Fig. 1 hervorgeht, kann das Abschattungs-Element 5 beispielsweise ein Kreissegment von etwa 90° bilden, das an seinem äußeren Bereich an dem Rahmenelement 4 positioniert ist. Die Drehstellung des kreisartigen Segments ist dabei vorzugsweise - insbesondere stufenlos - um 360° variierbar. Unabhängig davon, in welcher Drehstellung sich das Abschattungs-Element 5 befindet, wird die Funktionsweise des Sende- und/oder Empfangselements 6 aufgrund der Transmissionseigenschaften des Abschattungs-Elements 5 praktisch nicht durch das Abschattungs-Element 5 beeinträchtigt.

Anzumerken ist, dass die dargestellte Ausführungsform des Abschattungs-Elements 5 in Form eines Kreissegments nur eine von mehreren möglichen Ausführungsformen darstellt. Grundsätzlich kann das Abschattungs-Element 5 jede Form aufweisen, die als solche auch im Stand der Technik verwendet wird und zum Einsatz kommt.

Die Anordnung lässt sich besonders flach gestalten, so dass er sich insbesondere in Verbindung mit einer Beleuchtungs-Vorrichtung eignet.

## Patentansprüche

1. Sensor-Anordnung zum Erkennen einer Bewegung und/oder einer Anwesenheit einer Person, aufweisend
- ein Gehäuse (1) mit einer Öffnung (2) für eine elektromagnetische Strahlung erster Art und eine elektromagnetische Strahlung zweiter Art,
- einen, in dem Gehäuse (1) angeordneten Sensor (3) zum Erfassen der elektromagnetischen Strahlung erster Art,
- ein Abschattungs-Element (5), das die Öffnung (2) teilweise abschattend an dem Gehäuse (1) angeordnet ist, wobei das Abschattungs-Element (5) für die elektromagnetische Strahlung erster Art einen Transmissionsgrad aufweist, der kleiner als 30% ist,
- ein, in dem Gehäuse (1) zusätzlich zu dem Sensor (3) angeordnetes Sende- und/oder Empfangselement (6) zum Senden und/oder Empfangen von der elektromagnetischen Strahlung zweiter Art, wobei das Abschattungs-Element (5) für die elektromagnetische Strahlung zweiter Art einen Transmissionsgrad aufweist, der größer als 60% ist.
**dadurch gekennzeichnet,**
**dass** das Abschattungs-Element (5), derart ausgebildet ist, dass es in unterschiedlichen Positionen an dem Gehäuse (1) anbringbar ist, so dass es in jeder der Positionen jeweils einen anderen Teilbereich des Sensors (3) abschattet.

2. Sensor-Anordnung nach Anspruch 1,
**dadurch gekennzeichnet,**
**dass** das Abschattungs-Element (5) für die elektromagnetische Strahlung erster Art einen Transmissionsgrad aufweist, der kleiner als 20% ist und/oder für die elektromagnetische Strahlung zweiter Art einen Transmissionsgrad aufweist, der größer als 70% ist.

3. Sensor-Anordnung nach Anspruch 1 oder 2,
**dadurch gekennzeichnet,**
**dass** die elektromagnetische Strahlung erster Art eine elektromagnetische Strahlung in einem ersten Wellenlängenbereich (IR1) ist und die elektromagnetische Strahlung zweiter Art eine elektromagnetische Strahlung in einem zweiten Wellenlängenbereich (VIS-IR2), wobei sich der erste Wellenlängenbereich (IR1) und der zweite Wellenlängenbereich (VIS-IR2) nicht überlappen.

4. Sensor-Anordnung nach Anspruch 3,
**dadurch gekennzeichnet,**
**dass** die elektromagnetische Strahlung in dem ersten Wellenlängenbereich (IR1) Infrarotstrahlung ist und die elektromagnetische Strahlung in dem zweiten Wellenlängenbereich (VIS-IR2) Licht (VIS) und/oder eine weitere Infrarotstrahlung (IR2) ist, wobei die weitere Infrarotstrahlung (IR2) insbesondere kürzere Wellenlängen umfasst als die zuerst genannte Infrarotstrahlung (IR1).

5. Sensor-Anordnung nach einem der vorhergehenden Ansprüche,
**dadurch gekennzeichnet,**
**dass** das Abschattungs-Element (5) zumindest überwiegend aus einem lichtdurchlässigen Kunststoff besteht, insbesondere aus Polycarbonat besteht.

6. Sensor-Anordnung nach einem der vorhergehenden Ansprüche,
**dadurch gekennzeichnet,**
**dass** das Abschattungs-Element (5) reversibel von dem Gehäuse (1) abnehmbar gestaltet ist, insbesondere über eine Rastverbindung an dem Gehäuse (1) gehalten angeordnet ist.

7. Sensor-Anordnung nach einem der vorhergehenden Ansprüche,
**dadurch gekennzeichnet,**
**dass** das Abschattungs-Element (5) relativ zu dem Gehäuse (1) um eine Drehachse (A) drehbar gelagert ist.

8. Sensor-Anordnung nach Anspruch 7,
**dadurch gekennzeichnet,**
**dass** die Drehachse (A) durch den Sensor (3) verläuft.

9. Sensor-Anordnung nach einem der vorhergehenden Ansprüche,
**dadurch gekennzeichnet,**
**dass** das Sende und/oder Empfangselement (6) sich ringförmig um den Sensor (3) erstreckend angeordnet ist.

10. Sensor-Anordnung nach einem der vorhergehenden Ansprüche,
**dadurch gekennzeichnet,**
**dass** das Sende und/oder Empfangselement (6) zum Messen einer Helligkeit eines durch die Öffnung (2) einfallenden Lichts ausgestaltet ist und/oder für eine drahtlose Kommunikation mittels Infrarotstrahlung.

11. Sensor-Anordnung nach einem der vorhergehenden Ansprüche,
**gekennzeichnet durch,**
- ein ringartiges Rahmenelement (4) zur Halterung des Abschattungs-Elements (5), wobei vorzugsweise das Abschattungs-Element (5) relativ zu dem Rahmenelement (4) drehbar gelagert ist.

12. Sensor-Anordnung nach einem der vorhergehenden Ansprüche,
**gekennzeichnet durch,**
- ein kuppelartiges Element (7) zur Beeinflussung der elektromagnetischen Strahlung erster Art, wobei das kuppelartige Element (7) vorzugsweise zumindest überwiegend aus Polyethylen besteht.

13. Sensor-Anordnung nach Anspruch 12,
**dadurch gekennzeichnet,**
**dass** das Abschattungs-Element (5) das kuppelartige Element (7) teilweise abdeckend angeordnet ist.

## Claims

1. A sensor assembly for detecting the movement and/or the presence of a person, comprising:
- a housing (1) having an opening (2) for an electromagnetic radiation of a first type and an electromagnetic radiation of a second type,
- a sensor (3), arranged in the housing (1), for detecting the electromagnetic radiation of the first type,
- a shading element (5) that is arranged on the housing (1) so as to partially shade the opening (2), wherein the shading element (5) for the electromagnetic radiation of the first type has a transmittance that is less than 30%,
- a transmitting and/or receiving element (6), arranged in the housing (1) in addition to the sensor (3), for transmitting and/or receiving the electromagnetic radiation of the second type, wherein the shading element (5) for the electromagnetic radiation of the second type has a transmittance that is greater than 60%.
**characterized in that**
the shading element (5) is designed in such a way that it can be attached to the housing (1) in different positions such that, in each of the positions, it shades a respective different partial region of the sensor (3).

2. The sensor assembly according to claim 1,
**characterized in that**
the shading element (5) for the electromagnetic radiation of the first type has a transmittance that is less than 20% and/or has a transmittance for the electromagnetic radiation of the second type that is greater than 70%.

3. The sensor assembly according to claim 1 or 2,
**characterized in that**
the electromagnetic radiation of the first type is an electromagnetic radiation in a first wavelength range (IR1), and the electromagnetic radiation of the second type is an electromagnetic radiation in a second wavelength range (VIS-IR2), wherein the first wavelength range (IR1) and the second wavelength range (VIS-IR2) do not overlap.

4. The sensor assembly according to claim 3,
**characterized in that**
the electromagnetic radiation in the first wavelength range (IR1) is infrared radiation, and the electromagnetic radiation in the second wavelength range (VIS-IR2) is light (VIS) and/or a further infrared radiation (IR2), wherein the further infrared radiation (IR2) comprises in particular shorter wavelengths than the first cited infrared radiation (IR1).

5. The sensor assembly according to any one of the preceding claims,
**characterized in that**
the shading element (5) consists at least predominantly of a light-permeable plastic, in particular of polycarbonate.

6. The sensor assembly according to any one of the preceding claims,
**characterized in that**
the shading element (5) is designed to be reversibly removable from the housing (1), in particular is arranged so as to be held on the housing (1) via a latching connection.

7. The sensor assembly according to any one of the preceding claims,
**characterized in that**
the shading element (5) is mounted so as to be rotatable about an axis of rotation (A) relative to the housing (1).

8. The sensor assembly according to claim 7,
**characterized in that**
the axis of rotation (A) travels through the sensor (3).

9. The sensor assembly according to any one of the preceding claims,
**characterized in that**
the transmitting and/or receiving element (6) is arranged so as to extend annularly around the sensor (3).

10. The sensor assembly according to any one of the preceding claims,
**characterized in that**
the transmitting and/or receiving element (6) is designed to measure a brightness of a light incident through the opening (2), and/or for wireless communication by means of infrared radiation.

11. The sensor assembly according to any one of the preceding claims,
**characterized by**
- an annular frame element (4) for holding the shading element (5), wherein the shading element (5) is preferably mounted so as to be rotatable relative to the frame element (4).

12. The sensor assembly according to any one of the preceding claims,
**characterized by**
- a dome-like element (7) for influencing the electromagnetic radiation of the first type, wherein the dome-like element (7) preferably consists at least predominantly of polyethylene.

13. The sensor assembly according to claim 12,
**characterized in that**
the shading element (5) is arranged so as to partially cover the dome-like element (7).

## Revendications

1. Agencement de capteur destiné à reconnaître un mouvement et/ou une présence d'une personne, présentant
- un boîtier (1) avec une ouverture (2) pour un rayonnement électromagnétique d'un premier type et un rayonnement électromagnétique d'un second type,
- un capteur (3) agencé dans le boîtier (1) destiné à détecter le rayonnement électromagnétique de premier type,
- un élément d'assombrissement (5), qui est agencé sur le boîtier (1) de manière assombrissant partiellement l'ouverture (2), dans lequel l'élément d'assombrissement (5) présente pour le rayonnement électromagnétique de premier type une transmittance inférieure à 30 %,
- un élément d'émission et/ou de réception (6) agencé dans le boîtier (1) en plus du capteur (3) destiné à émettre et/ou à recevoir le rayonnement électromagnétique de second type, dans lequel l'élément d'assombrissement (5) présente pour le rayonnement électromagnétique de second type une transmittance supérieure à 60 %,
**caractérisé en ce**
**que** l'élément d'assombrissement (5) est conçu de manière à pouvoir être placé dans différentes positions sur le boîtier (1), de manière à assombrir, dans chacune des positions, respectivement une autre zone partielle du capteur (3).

2. Agencement de capteur selon la revendication 1,
**caractérisé en ce**
**que** l'élément d'assombrissement (5) présente pour le rayonnement électromagnétique de premier type une transmittance inférieure à 20 % et/ou présente pour le rayonnement électromagnétique de second type une transmittance supérieure à 70 %.

3. Agencement de capteur selon la revendication 1 ou 2,
**caractérisé en ce**
**que** le rayonnement électromagnétique de premier type est un rayonnement électromagnétique dans une première plage de longueurs d'onde (IR1) et le rayonnement électromagnétique de second type est un rayonnement électromagnétique dans une seconde plage de longueurs d'onde (VIS-IR2), dans lequel la première plage de longueurs d'onde (IR1) et la seconde plage de longueurs d'onde (VIS-IR2) ne se chevauchent pas.

4. Agencement de capteur selon la revendication 3,
**caractérisé en ce**
**que** le rayonnement électromagnétique dans la première plage de longueurs d'onde (IR1) est un rayonnement infrarouge et le rayonnement électromagnétique dans la seconde plage de longueurs d'onde (VIS-IR2) est une lumière (VIS) et/ou un autre rayonnement infrarouge (IR2), dans lequel l'autre rayonnement infrarouge (IR2) comprend en particulier des longueurs d'onde plus courtes que ledit premier rayonnement infrarouge (IR1).

5. Agencement de capteur selon l'une quelconque des revendications précédentes,
**caractérisé en ce**
**que** l'élément d'assombrissement (5) est constitué au moins principalement d'une matière plastique transparente, en particulier est constitué de polycarbonate.

6. Agencement de capteur selon l'une quelconque des revendications précédentes,
**caractérisé en ce**
**que** l'élément d'assombrissement (5) est conçu de manière à pouvoir être retiré de façon réversible du boîtier (1), en particulier est agencé maintenu par le biais d'une liaison d'encliquetage sur le boîtier (1).

7. Agencement de capteur selon l'une quelconque des revendications précédentes,
**caractérisé en ce**
**que** l'élément d'assombrissement (5) est monté rotatif par rapport au boîtier (1) autour d'un axe de rotation (A).

8. Agencement de capteur selon la revendication 7,
**caractérisé en ce**
**que** l'axe de rotation (A) s'étend à travers le capteur (3).

9. Agencement de capteur selon l'une quelconque des revendications précédentes,
**caractérisé en ce**
**que** l'élément d'émission et/ou de réception (6) est agencé s'étendant sous forme annulaire autour du capteur (3).

10. Agencement de capteur selon l'une quelconque des revendications précédentes,
**caractérisé en ce**
**que** l'élément d'émission et/ou de réception (6) est conçu pour mesurer une luminosité d'une lumière entrant à travers l'ouverture (2) et/ou pour une communication sans fil au moyen d'un rayonnement infrarouge.

11. Agencement de capteur selon l'une quelconque des revendications précédentes,
**caractérisé par,**
- un élément cadre de type anneau (4) pour le support de l'élément d'assombrissement (5), dans lequel de préférence l'élément d'assombrissement (5) est monté rotatif par rapport à l'élément cadre (4).

12. Agencement de capteur selon l'une quelconque des revendications précédentes,
**caractérisé par,**
- un élément de type dôme (7) pour influencer le rayonnement électromagnétique de premier type, dans lequel l'élément de type dôme (7) est constitué de préférence au moins principalement de polyéthylène.

13. Agencement de capteur selon la revendication 12,
**caractérisé en ce**
**que** l'élément d'assombrissement (5) est agencé pour recouvrir partiellement d'élément de type dôme (7).
